# EUROPÄISCHE PATENTANMELDUNG

(11) **EP 4 194 266 A1**
(43) Veröffentlichungstag der Anmeldung: **14.06.2023**
(21) Anmeldenummer: 21212715.3
(22) Anmeldetag: 07.12.2021
(51) Int. Cl.: B60P 7/08, B66C 1/66

(54) **RINGBOCK ALS ANSCHLAG- UND ZURRMITTEL**

(71) Anmelder: J.D. Theile GmbH & Co. KG, D-58239 Schwerte (DE)
(72) Erfinder: KRESIC, Ivan, 58239 Scherte (DE); MURACH, Tim, 58239 Schwerte (DE); SCHINSCHECK, Dirk, 58239 Schwerte (DE)
(74) Vertreter: Haverkamp Patentanwälte PartG mbB

(57) **Zusammenfassung**

Die Erfindung betrifft Ringbock als Anschlag- und Zurrmittel mit zwei Lagerböcken 2, 2.1 zum Befestigen an einem mit dem Ringbock 1, 1.1 handzuhabenden oder zu verzurrenden Gegenstand und mit einem Anschlussteil 3, 3.1 mit zwei voneinander wegweisend angeordneten Lagerzapfen 6, 6.1, die in jeweils eine Lageraufnahme 11 eines Lagerbockes 2, 2.1 eingreifen und darin um ihre Längsachse verschwenkbar gehalten sind. Besonderes Kennzeichen ist, dass jeder Lagerbock 2, 2.1 einen in Querrichtung zur Längsachse der Lageraufnahme 11 in diesen an einer Außenseite mündenden Klemmelementschacht 9 aufweist, der in die gegenüber der lichten Weite im Bereich des Überganges in die Lageraufnahme des Klemmelementschachtes (9) im Durchmesser größere Lageraufnahme 11 übergeht, dass in den Klemmelementschacht 9 ein nach Art einer Omega-Feder ausgeführtes Klemmelement 8, 8.1 eingesetzt ist, das mit seinem Ringabschnitt 14 in der Lageraufnahme 11 und mit seinen davon nach außen abgewinkelten Fortsätzen 15, 15.1 innerhalb des Klemmelementschachtes 9 angeordnet ist, und dass der Durchmesser des Ringabschnittes 14 des Klemmelementes 8, 8.1 im unbelasteten Zustand größer als die lichte Weite des Klemmelementschachtes im Übergang zur Lageraufnahme und sein Innendurchmesser im unbelasteten Zustand kleiner ist als der Durchmesser des darin eingreifenden Lagerzapfens 6, 6.1 des Anschlussteils 3, 3.1 ist.

## Beschreibung

Gegenstand der Erfindung ist ein Ringbock als Anschlag- und Zurrmittel mit zwei Lagerböcken zum Befestigen an einem mit dem Ringbock handzuhabenden oder zu verzurrenden Gegenstand und mit einem Anschlussteil mit zwei voneinander wegweisend angeordneten Lagerzapfen, die in jeweils eine Lageraufnahme eines Lagerbockes eingreifen und darin um ihre Längsachse verschwenkbar gehalten sind.

Ringböcke werden als Anschlag- und Zurrmittel zum Handhaben oder zum Verzurren eines Gegenstandes eingesetzt. Ein solcher Ringbock verfügt über zwei mit Abstand zueinander angeordnete Lagerböcke, in die jeweils eine Lageraufnahme eingebracht ist. Die Mündungen der Lageraufnahmen der beiden Lagerböcke sind zueinander weisend angeordnet. In die Lageraufnahme eines jeden Lagerbockes greift jeweils ein Lagerzapfen eines typischerweise ösenförmig ausgeführten Anschlussteils ein. Auf diese Weise ist das Anschlussteil durch seine in die Lageraufnahme eingreifenden Lagerzapfen um die Längsachse der Lagerzapfen gegenüber den Lagerböcken verschwenkbar. Die Lagerböcke sind zum Handhaben oder zum Verzurren eines Gegenstandes an diesem befestigt. Ist eine solche Befestigung dauerhaft vorgesehen, sind die Lagerböcke typischerweise mit dem handzuhabenden oder zu verzurrenden Gegenstand verschweißt. In anderen Fällen werden Schraubbefestiger eingesetzt, mit denen die Lagerböcke an dem handzuhabenden bzw. zu verzurrenden Gegenstand verschraubt werden.

Ein solcher Lagerbock ist aus EP 2 475 607 B1 bekannt. Bei diesem vorbekannten Ringbock ist vorgesehen, dass die in die Lageraufnahmen der Lagerböcke eingreifenden Lagerzapfen des Anschlussteils durch eine Axialsicherung in ihrer bestimmungsgemäßen, in die Lageraufnahme eingreifenden Position gesichert sind. Erreicht wird hiermit, dass sichergestellt ist, dass die Lagerzapfen hinreichend weit in die Lageraufnahmen eingreifen und eine Montage der Lagerböcke auf dem handzuhabenden oder zu verzurrenden Gegenstand nicht mit einem zu großen Abstand voneinander erfolgt. Zur Ausbildung der Axialsicherung verfügt jeder Lagerzapfen über eine umlaufende Nut, in die ein Sicherungselement eingreift. Hierdurch ist nicht nur die bestimmungsgemäße Positionierung zwischen Lagerzapfen und Lageraufnahme bei einer Montage einem Benutzer kenntlich gemacht, sondern hierdurch verbleibt der Lagerbock bis zu seinem Anschluss an den handzuhabenden oder festzuzurrenden Gegenstand in seiner Positionierung auf dem Lagerzapfen.

Die Realisierung einer solchen, in beide Richtungen wirkenden Axialsicherung ist nur mit einem entsprechenden Fertigungsaufwand möglich.

Aus diesem Stand der Technik ist ebenso wie aus anderem Stand der Technik bekannt, einen Anschlagpunkt hinsichtlich seines Anschlussteils hinsichtlich seiner Verschwenkbarkeit dergestalt zu lagern, dass dieses in verschwenkten Stellungen gehalten ist. Hierzu wird beispielsweise in DE 35 09 877 C1 der Einsatz einer Klemmfeder vorgeschlagen. Dieser Anschlagpunkt verfügt über ein bügelförmiges Befestigungsteil, welches den unteren Steg des als Öse ausgeführten Anschlussteils übergreift und an dem handzuhabenden bzw. zu verzurrenden Gegenstand befestigt ist. Die Klemmfeder sitzt in einer in das Unterteil eingebrachten Lagerausnehmung und verfügt über einen offenen Ringabschnitt, an dessen Enden Halteschenkel nach außen abragend angeformt sind. Diese sind S-förmig konturiert und greifen in eine hinterschnittene Nut des Unterteils ein. Die Klemmfeder wirkt auf das Lagerteil des Anschlussteils und hält diesen in unterschiedlichen Positionen reibschlüssig. Aus EP 2 475 607 B1 ist eine Arretiereinrichtung zum Arretieren des Anschlussteils in unterschiedlichen Schwenkstellungen mittels einer Rastung offenbart.

Ausgehend von dem diskutierten Stand der Technik liegt der Erfindung die Aufgabe zu Grunde, einen Ringbock als Anschlag- und Zurrmittel vorzuschlagen, der nicht nur mit wenigen Herstellungsschritten kostengünstig hergestellt werden kann, sondern bei dem ebenfalls eine Fixierung des Anschlussteils gegenüber den Lagerböcken in unterschiedlichen Schwenkstellungen möglich ist.

Gelöst wird diese Aufgabe erfindungsgemäß durch einen eingangs genannten, gattungsgemäßen Ringbock, bei dem jeder Lagerbock einen in Querrichtung zur Längsachse der Lageraufnahme in diesen an einer Außenseite mündenden Klemmelementschacht aufweist, der in die gegenüber der lichten Weite des Klemmelementschachtes im Durchmesser größere Lageraufnahme übergeht, dass in den Klemmelementschacht ein nach Art einer Omega-Feder ausgeführtes Klemmelement eingesetzt ist, das mit seinem Ringabschnitt in der Lageraufnahme und mit seinen davon nach außen abgewinkelten Fortsätzen innerhalb des Klemmelementschachtes angeordnet ist, und dass der Durchmesser des Ringabschnittes des Klemmelementes im unbelasteten Zustand größer als die lichte Weite des Klemmelementschachtes im Übergang zur Lageraufnahme und sein Innendurchmesser im unbelasteten Zustand kleiner ist als der Durchmesser des darin eingreifenden Lagerzapfens des Anschlussteils ist.

Als Omega-Feder wird im Rahmen dieser Ausführung jedwede Feder verstanden, die einen Ringabschnitt und zwei gegenüber dem Ringabschnitt abgewinkelte, voneinander beabstandete Fortsätze aufweist.

Bei diesem Ringbock befindet sich in jedem der Lagerböcke ein nach Art einer Omega-Feder ausgeführtes Klemmelement, das auf die Mantelfläche des darin eingreifenden Lagerzapfens des Anschlussteils wirkt. Die Lagerböcke verfügen über einen in Querrichtung zu der Längsachse der Lageraufnahme verlaufenden Klemmelementschacht, in den das Klemmelement eingesetzt ist. Dieser mündet an einer Seitenfläche des Lagerbocks. Der Klemmelementschacht geht über in die quer dazu verlaufende Lageraufnahme. Der Klemmelementschacht weist im Übergang in die Lageraufnahme eine geringere lichte Weite auf als der Durchmesser der Lageraufnahme. Bei einer Auslegung des Klemmelementschachtes, der sich in Richtung zur Lageraufnahme hin verjüngt, befindet sich im Übergang von dem Klemmelementschacht zu der Lageraufnahme sich eine Engstelle, die im unbelasteten Zustand des Ringabschnittes des Klemmelementes eine lichte Weite aufweist, die kleiner ist als der Außendurchmesser des Ringabschnittes des Klemmelementes. Zudem ist das Klemmelement derart konzipiert, dass in seiner unbelasteten Stellung sein Innendurchmesser kleiner ist als der Durchmesser des darin eingreifenden Lagerzapfens des Anschlussteils. Diese Engstelle im Klemmelementschacht erlaubt eine einfache Montage des Klemmelementes, in dem dieses in den seitlich offenen Klemmelementschacht eingesetzt und mit seinem Ringabschnitt in die bezüglich ihres Durchmessers größere Lageraufnahme geführt wird. Dieses ist trotz des größeren Außendurchmessers des Ringabschnittes des Klemmelementes möglich, da in Folge seiner Federeigenschaften die Schenkel des Ringabschnittes beim Durchführen durch die Engstelle aufeinander zubewegt werden und somit der Durchmesser des Ringabschnittes verkleinert wird. Ist der Ringabschnitt mit seinem größten Durchmesser durch die Engstelle im Bereich des Überganges des Klemmelementschachtes in die Lageraufnahme hindurchgeführt, stellen sich die gegeneinander verstellten Schenkel des Ringabschnittes zurück, so dass dann der Ringabschnitt formschlüssig in der Lageraufnahme gehalten ist. Dabei wirkt die äußere, typischerweise gekrümmte Mantelfläche des Ringabschnittes als Stellschräge, durch die die beiden Schenkel desselben beim Durchdrücken des Klemmelementes durch die Endstelle aufeinander zubewegt werden. Das Klemmelement ist in der Lageraufnahme in unbelastetem Zustand mit radialem Spiel aufgenommen, so dass sein Ringabschnitt durch Einsetzen eines Lagerabschnittes in die Lageraufnahme und damit in den Ringabschnitt aufgeweitet werden kann. Dieses Aufweiten erfolgt gegen die Rückstellkraft des Klemmelementes, so dass das Klemmelement mit der Innenseite seines Ringabschnittes auf die Mantelfläche des Lagerzapfens des Anschlussteils wirkt. Da bei diesem Ringbock in jedem Lagerbock ein solches Klemmelement enthalten ist, wird die notwendige Klemmkraft zum Bereitstellen eines Reibschlusses zum Halten des Anschlussteils in gegenüber den Lagerböcken unterschiedlichen verschwenkten Stellungen von zwei Klemmelementen aufgebracht. Aus diesem Grunde braucht die Klemmkraft jedes einzelnen Klemmelementes zum Halten des Anschlussteils in unterschiedlichen Schwenkstellungen gegenüber den Lagerböcken nur entsprechend geringer zu sein als bei einer Bereitstellung des Reibschlusses durch ein einziges Klemmelement. Dieses ist vorteilhaft für eine Montage der Ringböcke auf den Lagerzapfen, da hierfür auch nur eine entsprechend geringere Kraft aufgewendet werden muss, um jedes Klemmelement durch Einschieben des Lagerzapfens in seinen Ringabschnitt aufzuweiten.

Die von dem Ringabschnitt des nach Art einer Omega-Feder konzipierten Klemmelementes nach außen abgewinkelten Fortsätze dienen einer Verdrehsicherung. Aus diesem Grunde sind diese außerhalb des Lagerabschnittes in dem Klemmelementschacht angeordnet. Diese wirken als Anschlag gegen die zu diesen benachbarten Wänden des Klemmelementschachtes, wodurch auf einfache Weise ein Verdrehen des Klemmelementes in der Lageraufnahme durch diesen Formschluss verhindert ist. Dabei kann die Auslegung der Länge der Fortsätze so ausgelegt werden, dass bei eingesetztem Lagerzapfen das Anschlussteil quasi spielfrei in Verschwenkrichtung gehalten ist.

Von besonderem Vorteil dieses Ringbockes ist, dass die Lagerböcke mit wenigen und unproblematisch durchzuführenden Herstellungsschritten und damit kostengünstig hergestellt werden können. Die Lagerböcke können Schmiedeteile sein, in die der Klemmelementschacht durch den Schmiedevorgang eingebracht ist. Dieses ist in einem bevorzugten Ausführungsbeispiel vorgesehen. In einem nachfolgenden Schritt wird dann die Lageraufnahme als Querbohrung zu der Längserstreckung des Klemmelementschachtes in den Lagerbock eingebracht. Ein Entgraten kann zweckmäßig sein. Bei einem auf diese Weise hergestellten Lagerbock wird zur Ausbildung der Engstelle im Übergang vom Klemmelementschacht in die Lageraufnahme in geschickter Weise eine für das Schmieden erforderliche Entformungsschräge der den Klemmelementschacht bildenden Wände genutzt, um im Übergang von dem Klemmelementschacht in die Lageraufnahme die Engstelle auszubilden. Zum Halten des Klemmelementes innerhalb der Lageraufnahme braucht die lichte Weite der Engstelle nur wenig kleiner zu sein als der Außendurchmesser seines Ringabschnittes. Die Achse der Lagerausnehmung befindet sich somit mit einem gewissen Abstand zu der Engstelle in Richtung der bzw. dem Übergang von dem Klemmelementschacht zu der Lagerausnehmung hin versetzt. Dieser Abstand der Achse der Lagerausnehmung zur Engstelle braucht nur wenige zehntel Millimeter zu betragen. Der Abstand ist abhängig von der Außendurchmesser des Ringabschnittes des Klemmelementes und den herstellungsbedingt in Kauf zu nehmenden Toleranzen. Bei im Durchmesser größeren Lageraufnahmen kann dieser Abstand auch einige Millimeter betragen.

Auch wenn das Klemmelement mit seinem Ringabschnitt vor der Montage eines darin eingreifenden Lagerzapfens des Anschlussteils innerhalb der Lageraufnahme lose und mit dem notwendigen Spiel zum Ermöglichen eines hinreichenden Aufweitens des Ringabschnittes gehalten ist, kann bei in den Ringabschnitt eingesetztem Lagerzapfen die äußere Mantelfläche des Ringabschnittes spielfrei oder quasi spielfrei an der die Lagerausnehmung einfassenden Wand des Lagerbockes anliegen. Typischerweise wird zwischen der äußeren Mantelfläche des Ringabschnittes des Klemmelementes und der inneren Mantelfläche der Lageraufnahme auch bei eingestecktem Lagerzapfen des Anschlussteils ein gewisses Spiel verbleiben, welches auf die maximale positive Toleranzabweichung des Durchmessers der Lagerzapfen ausgelegt ist.

Da bei diesem Ringbock das Anschlussteil durch die in den Lagerböcken befindlichen Klemmelemente in unterschiedlichen Winkelstellungen gehalten ist, sind auch bei noch nicht an einem handzuhabenden oder zu verzurrenden Gegenstand angeschlossenem Ringbock die Lagerböcke am Anschlussteil gehalten, was vorteilhaft für die Handhabbarkeit des Ringbockes ist.

Damit die Mündung des Klemmelementschachtes bei in Benutzung befindlichem Ringbock verschlossen ist, auch um ein Eindringen von Verunreinigungen in die Lageraufnahmen zu verhindern, ist in einem bevorzugten Ausführungsbeispiel der Klemmelementschacht von der Unterseite der Lagerböcke in diese eingebracht. Damit ist die Mündung des Klemmelementschachtes durch die Oberfläche des handzuhabenden oder zu verzurrenden Gegenstandes verschlossen, an den der Ringbock angeschlossen ist. Auch wenn vorstehend auf die Möglichkeit der Herstellung der Lagerböcke durch Schmieden hingewiesen worden ist, wobei das den Klemmelementschacht ausbildende Formwerkzeug vorzugsweise bezüglich aller seiner Wände für die gewünschte Entformung geneigt ist, kann der Klemmelementschacht auch auf andere Weise ausgebildet werden, beispielsweise durch Fräsen oder dergleichen. Grundsätzlich ist es nicht erforderlich, dass die einander gegenüberliegenden Wände des Klemmelementschachtes im Übergang zur Lageraufnahme beide einen Vorsprung zur Ausbildung der Engstelle aufweisen, sondern lediglich ein solcher Vorsprung nur entlang einer Wand vorgesehen ist.

Vorzugsweise sind die quer zur Ebene des Anschlussteils verlaufenden Seitenwände des Klemmelementschachtes eines Lagerbockes in Richtung zur Lageraufnahme hin verjüngt, sodass das Klemmelement an diesen Seitenwänden des Klemmelementschachtes nicht anliegt. Die angrenzende Unterseite der Lagerböcke stellt den Boden derselben dar. Mithin wird bei einem Anschweißen der Lagerböcke an einem handzuhabenden Gegenstand Wärme insbesondere in diese Teile des Lagerbockes eingekoppelt, wobei infolge der Beabstandung des Klemmelementes von diesen Seitenwänden für eine thermische Isolierung gesorgt ist, um einen Wärmeeintragung durch das Schweißen in das typischerweise aus einem Federbandstahl hergestellte Klemmelement gering zu halten.

Die Klemmelemente der Lagerböcke sind vorzugsweise aus Bandfederabschnitten hergestellt. In Abhängigkeit von der Breite eines solchen Bandfederelementes wird eine entsprechend große, auf den von dem Ringabschnitt eingefassten Lagerzapfen wirkende Kontaktfläche zur Ausbildung des gewünschten Reibschlusses bereitgestellt.

Zum erleichterten Anschließen der Lagerböcke an die Lagerzapfen des Anschlussteils verfügen die Lagerzapfen endseitig über eine Fase als Stellschräge zum Aufweiten des Klemmelements bei der Einsteckbewegung. Möglich ist auch das Vorsehen einer gekrümmten Stellschräge.

Da bei diesem Ringbock die Fixierung des Anschlussteils durch Eingreifen der Lagerzapfen in die Lagerausnehmungen der Lagerböcke bereitgestellt ist, ist man hinsichtlich der Auslegung des Anschlussteils im Übrigen nicht eingeschränkt. Das Anschlussteil kann beispielsweise als offene Öse ausgebildet sein. Werden höhere Kräfte in den Ringbock eingeleitet, wird man vorzugsweise die Lagerzapfen ausbilden, dass diese ineinander übergehen, mithin das Anschlussteil einen unteren beispielsweise stabförmigen Abschnitt aufweist, an dessen Enden sich die beiden Lagerzapfen befinden. Dieser untere Abschnitt dient als Basis für einen daran angeformten Ösenbogen oder eine daran angeformte oder anderweitig daran angeschlossene Öse.

In einer Weiterbildung ist vorgesehen, dass die Lagerzapfen außenseitig eine Einsteckmarkierung tragen, durch die einem Benutzer kenntlich gemacht ist, wie weit ein Lagerzapfen in eine Lagerausnehmung eines Lagerbockes einzuschieben ist, wenn mit dem Ringbock die Nennkräfte aufgenommen werden sollen.

Die Lagerböcke eines solchen Ringbockes sind typischerweise an den handzuhabenden Gegenstand angeschweißt. Diese Fügeverbindung wird erstellt, nachdem die beiden Lagerböcke mit dem Anschlussteil verbunden sind, sodass dessen Lagerzapfen in die jeweils mit einem Klemmelement ausgerüsteten Lageraufnahmen jedes Lagerbockes eingreifen. Bei einer solchen Auslegung des Ringbockes hat es sich als zweckmäßig erwiesen, wenn die abgewinkelten Fortsätze des Klemmelementes mit ihrer nach außen weisenden Flachseite an der den Klemmelementschacht begrenzenden Wand des Lagerbockes anliegen. Dieses erweist sich als vorteilhaft, da dann die ansonsten der Schweißwärme ausgesetzten Fortsätze oder deren Endabschnitte die vorhandene Wärme in den Lagerbock ableiten, mithin der Lagerbock diesbezüglich als Wärmesenke genutzt wird. Eine übermäßige Erwärmung eines solchen Klemmelementes gilt es zu vermeiden, wenn die zuvor eingestellten Federeigenschaften nicht beeinträchtigt werden sollen. Die Anlage der abgewinkelten Fortsätze an der benachbarten Klemmelementeschachtwand steht vorzugsweise unter einer gewissen Vorspannung, die durch die Montage des Lagerzapfens in den Ringabschnitt des Klemmelementes bewirkt wird.

Die Erfindung ist nachfolgend unter Bezugnahme auf die beigefügten Figuren anhand von Ausführungsbeispielen beschrieben. Es zeigen:
- **Fig. 1:**: Eine Vorderseitenansicht eines Ringbockes mit einem in zwei Lagerböcken gelagerten Anschlussteil,
- **Fig. 2:**: eine Darstellung eines weiteren Ringbockes, der sich von dem Ringbock der Figur 1 lediglich in der Auslegung seines Anschlussteils unterscheidet, nach Art einer Explosionsdarstellung,
- **Fig. 3:**: einen Längsschnitt durch einen der Lagerböcke der Figur 1 entlang der Linie A-B ohne ein darin eingesetztes Klemmelement,
- **Fig. 4:**: die Schnittdarstellung der Figur 3 mit einem darin eingesetzten Klemmelement
- **Fig. 5:**: die Schnittdarstellung der Figur 4 mit dem in dem Lagerbock gelagerten Lagerzapfen des Anschlussteils,
- **Fig. 6:**: eine Schnittdarstellung durch den Lagerbock eines Ringbockes gemäß einem weiteren Ausführungsbeispiel und
- **Fig. 7:**: eine Querschnittsdarstellung in Querrichtung zu dem Anschlussteil des Ringbockes der Figur 6.

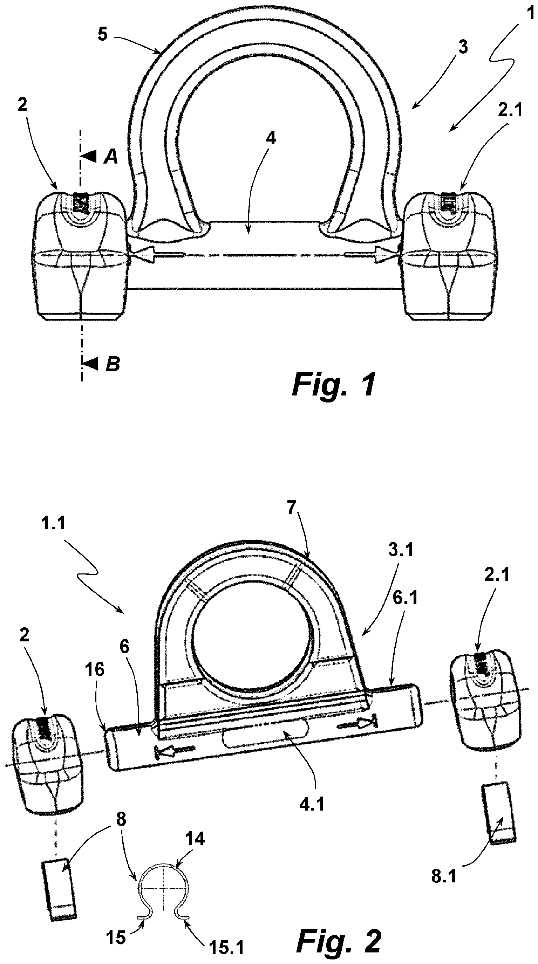

Eine Ringbock 1 dient zum Handhaben, zum Festlegen oder zum Verzurren von Gegenständen. Der Ringbock 1 verfügt über zwei Lagerböcke 2, 2.1. Die beiden Lagerböcke 2, 2.1 sind voneinander beabstandet. Zwischen den Lagerböcken 2, 2.1 befindet sich ein insgesamt mit dem Bezugszeichen 3 kenntlich gemachtes Anschlussteil. Das Anschlussteil 3 des Ausführungsbeispiels der Figur 1 verfügt über eine stabförmige Basis 4 mit zylindrischer Mantelfläche, die endseitig jeweils als Lagerzapfen ausgebildet sind. Die Lagerzapfen greifen jeweils in eine Lagerausnehmung der Lagerböcke 2, 2.1 ein. An die Basis 4 ist ein Ösenbogen 5 angeformt. Der Ösenbogen 5 dient zum Anschlagen eines Hebe- oder Zurrmittels.

In dem in Figur 2 gezeigten Ausführungsbeispiel eines weiteren Ringbockes 1.1, der nach Art einer Explosionsdarstellung dargestellt ist, sind die Lagerzapfen 6, 6.1 der Basis 4.1 erkennbar. Der Ringbock 1.1 unterscheidet sich von dem Ringbock 1 lediglich durch die Auslegung seines Anschlussteils 3.1, und zwar dahingehend, dass an die Basis 4.1 eine Öse 7 angeformt ist und nicht lediglich ein Ösenbogen, wie bei dem Ausführungsbeispiel der Figur 1. Die Lagerböcke 2, 2.1 des Ringbockes 1.1 sind identisch mit denjenigen des Ringbockes 1 und tragen zu diesem Zweck auch dieselben Bezugszeichen, und zwar 2, 2.1. Aus der Explosionsdarstellung der Figur 2 wird deutlich, dass in den Lagerböcken 2, 2.1 jeweils ein Klemmelement 8, 8.1 angeordnet ist, welches auf den in eine Lagerausnehmung eingreifenden Lagerzapfen 6, 6.1 des Anschlussteils 1 bzw. 1.1 wirkt. Die Klemmelemente 8, 8.1 sind aus einem Bandfederstahl hergestellt und sind in Form einer Omega-Feder gebracht, wie dieses anhand des Klemmelementes 8 in Figur 2 in seiner zu der Explosionsdarstellung um 90 Grad gedrehten Darstellung erkennbar ist.

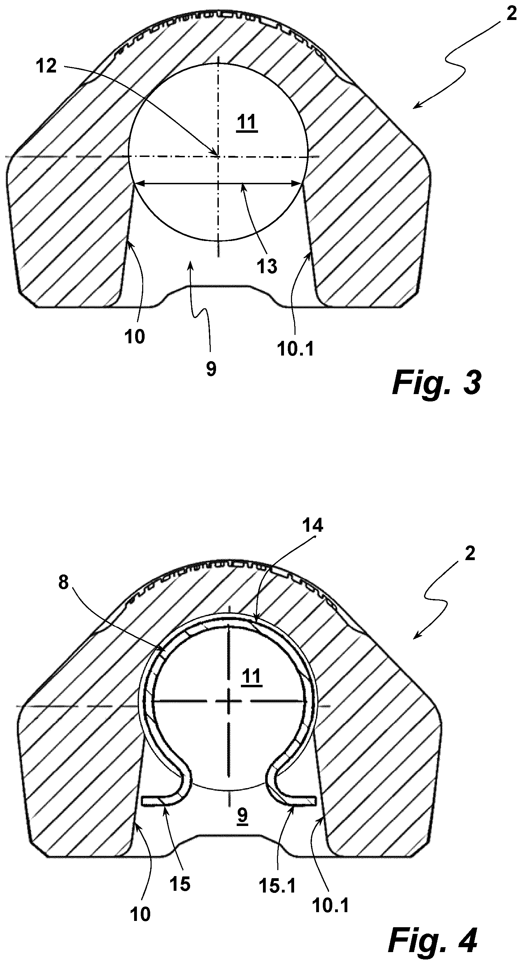

Nachfolgend ist der Aufbau des Lagerbockes 2 näher beschrieben. Der Lagerbock 2.1 ist genauso aufgebaut, weshalb die nachstehenden Ausführungen für diesen gleichermaßen gelten. Der Lagerbock 2 ist ein Schmiedeteil mit einem Klemmelementschacht 9, der in die Unterseite des Lagerbockes 2 eingebracht ist. Der Klemmelementschacht 9 ist durch den Schmiedeprozess hergestellt. Die Mündung des Klemmelementschachtes 9 ist zur Unterseite des Lagerbockes 2 gerichtet, mithin zu derjenigen Seite, mit der der Lagerbock 2 auf der Oberfläche eines handzuhabenden oder zu verzurrenden Gegenstandes anliegt. Der Klemmelementschacht 9 ist mit geneigten Seitenwänden 10, 10.1 ausgeführt. Die Neigung der Seitenwände 10, 10.1 beträgt bei dem dargestellten Ausführungsbeispiel etwa 6 Grad gegenüber einer Horizontalen. Diese Schräge wird zugleich als Entformungsschräge für ein den Klemmelementschacht 9 formendes Werkzeug beim Schmieden genutzt. Der Klemmelementschacht 9 setzt sich fort in eine Lageraufnahme 11. Die Erstreckung der Lageraufnahme 11 verläuft quer zur Längserstreckung des Klemmelementschachtes 9 und mündet an der zu dem Anschlussteil 3 bzw. 3.1 weisenden Lagerbockseite. Die gegenüberliegende Lagerbockseite ist verschlossen. Die Lageraufnahme 11 ist beim dem dargestellten Ausführungsbeispiel als Bohrung in den Lagerbock 2 eingebracht. Die Achse der Bohrung ist in Figur 3 mit dem Bezugszeichen 12 kennglich gemacht.

Die Auslegung des Klemmelementschachtes 9 und der Lagerbohrung 11 sind so aufeinander abgestimmt, dass im Übergang von dem Lagerschacht 9 in die Lageraufnahme 11 eine Engstelle 13 gebildet ist. Dies bedeutet, dass aus Sicht der Mündung des Klemmelementschachtes 9 an der Unterseite des Lagerbockes 2 die Lageraufnahme 11 hinterschnitten ist. Erreicht wird dieses dadurch, dass die Achse 12 der Lageraufnahme 11 von der Engstelle 13 in Richtung von der Mündung des Klemmelementschachtes 9 zur Lageraufnahme 11 hin versetzt ist. Diese Geometrie des Innenhohlraums des Lagerbockes 9, bestehend aus der Lageraufnahme 11 und dem Klemmelementschacht 9, wird genutzt, um das nach Art einer Omega-Feder geformte Klemmelement 8 in der Lageraufnahme 11 unverlierbar zu Halten. Das Klemmelement 8 verfügt über einen offenen Ringabschnitt 14 und daran angeformte, nach außen gewinkelte Fortsätze 15, 15.1. Gehalten ist das Klemmelement 8 in der Lageraufnahme 11, da der Außendurchmesser seines Ringabschnittes 14 größer als die lichte Weite der Engstelle 13 ist. Auf Grund der Federelastizität des Klemmelementes 8 kann dieses ohne Weiteres in den Klemmelementschacht 9 eingeführt und durch die Engstelle 13 hindurchgeführt werden. Die gekrümmte äußere Mantelfläche des Ringabschnittes 14 wirkt auf Grund ihrer Krümmung an den geneigten Seitenwänden 10, 10.1 als Stellschräge, damit der Ringabschnitt 14 hinsichtlich seines Durchmessers zum Passieren der Engstelle 13 reduziert wird. Ist der Scheitel des Ringabschnittes 14, in dem dieser seinen größten Außendurchmesser aufweist, durch die Engstelle 13 hindurchgeführt, entspannt sich das Federelement 8 wieder, so dass dieses auf diese Weise in der Lageraufnahme 11 gehalten ist. Diese Situation ist in Figur 4 gezeigt. Erkennbar ist, dass zwischen der äußeren Mantelfläche des Ringabschnittes 14 und der inneren Mantelfläche der Lageraufnahme 11 ein Spalt verbleibt. Hierdurch wird das notwendige Bewegungsspiel bereitgestellt, um den Lagerzapfen 6 darin einführen zu können.

Der Innendurchmesser des Ringabschnittes 14 ist kleiner bemessen als der Durchmesser des in die Lageraufnahme 11 eingreifenden Lagerzapfens 6. Dieser zeigt an seinem freien Ende eine Fase 16, durch die beim Einstecken des Lagerzapfens 6 in die Lageraufnahme 11 mit dem darin befindlichen Klemmelement 8 Letzteres aufgeweitet wird, um dann mit der inneren Oberfläche seines Ringabschnittes 14 an der Mantelfläche des Lagerzapfens 6 anzuliegen.

Um ein Aufweiten zu gestatten, sind die Enden der Fortsätze 15, 15.1 ebenfalls mit entsprechendem Abstand zu den Seitenwänden 10, 10.1 bei unbelastetem Klemmelement angeordnet (siehe Figur 4).

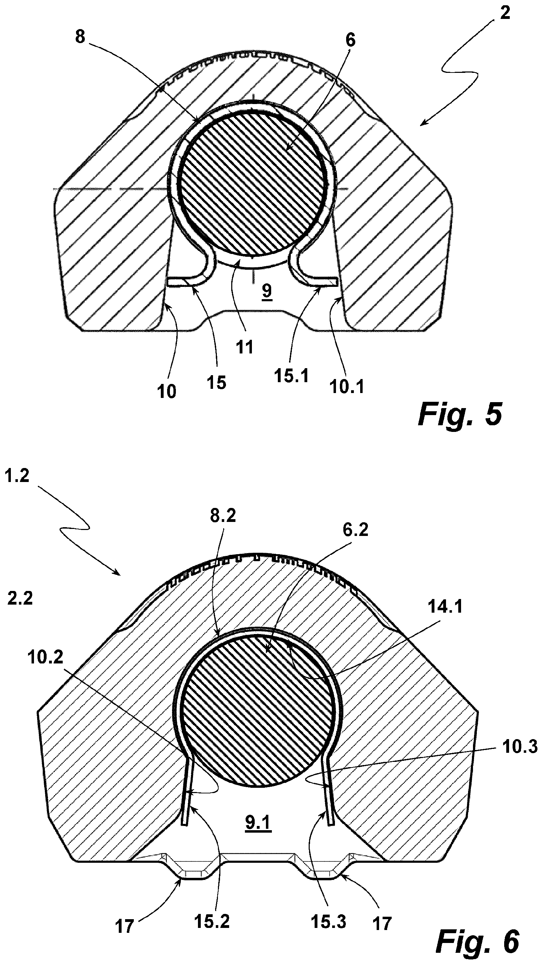

Figur 5 zeigt den Lagerbock 2 mit dem in die Lageraufnahme 11 mit dem darin befindlichen Klemmelement 8 eingesetzten Lagerzapfen 6. Das Klemmelement 8 ist auf Grund des gegenüber seinem Innendurchmesser im Durchmesser größeren Lagerzapfen 6 aufgeweitet. Erkennbar ist dieses daran, dass die Weite des in der Figur 4 die äußere Mantelfläche des Ringabschnittes 14 umgebenden Spaltes deutlich reduziert ist und die freien Enden der Fortsätze 15, 15.1 in unmittelbare Nähe zu den Seitenwänden 10, 10.1 verstellt worden sind. In dieser Stellung wirkt die durch das Aufweiten des Federelements 8 resultierende Federspannung auf die Mantelfläche des Lagerzapfens 6 und liegt daran reibschlüssig bis zu einem bestimmten Drehmoment an. Durch das Eingreifen der Fortsätze 15, 15.1 und die Ausrichtung der Enden der Fortsätze 15, 15.1 bis unmittelbar an die Seitenwände 10, 10.1 ist eine wirksame, quasi spielfreie Verdrehsicherung des Klemmelementes 8 innerhalb der Lagerausnehmung 11 bereitgestellt. Die auf den Lagerabschnitt 6 wirkende Federkraft ist ausreichend, damit in Zusammenwirkung mit der auf den Lagerzapfen 6.1 wirkenden Federkraft des Klemmelementes 8.1 des anderen Lagerbockes 2.1 das Anschlussteil 3 bzw. 3.1 in unterschiedlichen Schwenkstellungen gegenüber den Lagerböcken 2, 2.1 reibschlüssig gehalten ist.

Die auf die Lagerabschnitte 6, 6.1 wirkende Federkraft kann auch über die Breite des vorzugsweise aus einem Stahlfederband hergestellten Federelementes 8 beeinflusst werden, und zwar über die Größe der Kontaktfläche.

Vorteilhaft bei der vorbeschriebenen Auslegung ist, dass die erforderliche Haltekraft zum Halten des Anschlussteils 3, 3.1 in verschiedenen Schwenkstellungen gegenüber den Lagerböcken 2, 2.1 durch zwei Klemmelemente 8, 8.1 realisiert wird, so dass ein Einführen der Lagerzapfen 6, 6.1 in die in den Lagerausnehmungen 11 gehaltenen Klemmelemente 8, 8.1 mit entsprechend geringem Kraftaufwand möglich ist.

Figur 6 zeigt in einer Schnittdarstellung einen Lagerbock 2.2 eines weiteren Ringbockes 1.2 mit dem in seine Lageraufnahme und dem darin eingesetzten Klemmelement 8.2 befindlichen Lagerzapfen 6.2 des im Übrigen nicht näher dargestellten Anschlussteils. Der Ringbock 1.2 ist prinzipiell aufgebaut wie die Ringböcke 1, 1.1 der vorbeschriebenen Ausführungsbeispiele.

Gleiche Merkmale sind daher mit denselben Bezugszeichen, ergänzt um einen Suffix mit der nächsthöheren Nummerierung, kenntlich gemacht. Das bei diesem Ausführungsbeispiels ebenfalls nach Art einer Omega-Feder ausgeführte Klemmelement 8.2 weist im Unterschied zu dem Ausführungsbeispiel der Figur 4 abgewinkelte Fortsätze 15.2, 15.3 auf, die eine gerade Erstreckung aufweisen. Die Fortsätze 15.2, 15.3 sind gerade ausgeführt, damit diese bei in dem Ringabschnitt 14.1 des Klemmelementes 8.2 eingesetzten Lagerzapfen 6.2 mit ihrer Außenseite an den den Klemmelementschacht 9.1 einfassenden Seitenwänden 10.2 bzw. 10.3 anliegen. Bei dieser in Figur 6 gezeigten Anlageanordnung der abgewinkelten Fortsätze 15.2, 15.3 wirken deren Außenseiten mit einer geringen Vorspannung gegen die Seitenwände 10.2, 10.3. Durch diese Maßnahme ist ein Wärmeübergang von den Fortsätzen 15.2, 15.3 in den Lagerbock 2.2 gewährleistet. Dieses wirkt sich günstig auf eine Wärmeableitung aus, sollten die Fortsätze 15.2, 15.3 einer Wärmebeaufschlagung beispielsweise durch Anschweißen der Lagerböcke 2.2 an einem handzuhabenden Gegenstand ausgesetzt sein.

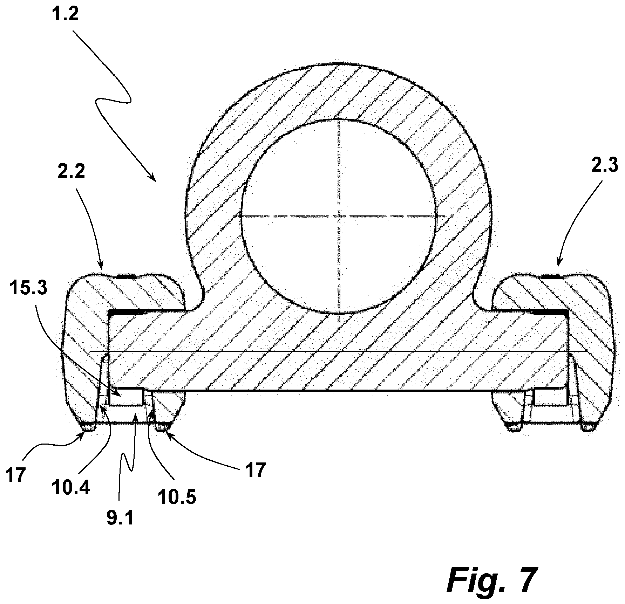

Figur 7 zeigt in einem Querschnitt entlang der Ebene des Anschlussteils den Ringbock 1.2. In dieser Schnittdarstellung sind die Lagerböcke 2.2, 2.3 in Querrichtung geschnitten. Somit sind in dieser Darstellung auch die Klemmelementschächte 9.1, 9.2 hinsichtlich der Geometrie ihrer lichten Weite in dieser Richtung erkennbar. Nachstehend ist der Klemmelementschacht 9.1 beschrieben. Selbiges gilt auch für den Klemmelementschacht 9.2 des Lagerbockes 2.3. Bei diesem Ausführungsbeispiel sind auch die quer zu der gezeigten Schnittebene der Figur 7 verlaufenden Seitenwände 10.4, 10.5 in Richtung zur Lageraufnahme hin verjüngt. Damit sind die abgewinkelten Fortsätze 15.2, 15.3 des Klemmelementes 8.2 von den Seitenwänden 10.4, 10.5 beabstandet. Die abgewinkelten Fortsätze 15.2, 15.3 liegen somit, wie vorstehend anhand der Figur 6 beschrieben, mit ihren Außenseiten lediglich an den Seitenwänden 10.2, 10.3 an. Damit ist das Klemmelement 8.2 mit seinen abgewinkelten Fortsätzen 15.2, 15.3 gegenüber der Unterseite des Lagerbockes 2.2 mit seinen Schweißstützvorsprüngen 17 bzw. den diese Schweißstützvorsprünge 17 tragenden Teilen des Lagerbockes 2.2 beanstandet und hierdurch thermisch isoliert. Dieses wirkt sich positiv dahingehend aus, dass beim Anschweißen der Lagerböcke 2.2 und 2.3 an einen handzuhabenden Gegenstand das als Omega-Feder ausgeführte Klemmelement 8.2 nicht soweit erwärmt wird, dass die gewünschten Federeigenschaften beeinträchtigt sind oder dieses sich verformt.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass diese im Rahmen dieser Ausführungen im Einzelnen näher beschrieben werden müssten.

### Bezugszeichenliste

- 1, 1.1, 1.2: Ringbock
- 2, 2.1, 2.2: Lagerbock
- 3, 3.1: Anschlussteil
- 4, 4.1: Basis
- 5: Ösenbogen
- 6, 6.1, 6.2: Lagerzapfen
- 7: Öse
- 8, 8.1, 8.2: Klemmelement
- 9, 9.1: Klemmelementschacht
- 10, 10.1, 10.2, 10.3: Seitenwand
- 10.4, 10.5: Seitenwand
- 11: Lageraufnahme
- 12: Achse
- 13: Engstelle
- 14, 14.1: Ringabschnitt
- 15, 15.1, 15.2, 15.3: Fortsatz
- 16: Fase

## Patentansprüche

1. Ringbock als Anschlag- und Zurrmittel mit zwei Lagerböcken (2, 2.1, 2.2) zum Befestigen an einem mit dem Ringbock (1, 1.1, 1.2) handzuhabenden oder zu verzurrenden Gegenstand und mit einem Anschlussteil (3, 3.1, 3.2) mit zwei voneinander wegweisend angeordneten Lagerzapfen (6, 6.1, 6.2), die in jeweils eine Lageraufnahme (11) eines Lagerbockes (2, 2.1, 2.2) eingreifen und darin um ihre Längsachse verschwenkbar gehalten sind, **dadurch gekennzeichnet, dass** jeder Lagerbock (2, 2.1) einen in Querrichtung zur Längsachse der Lageraufnahme (11) in diesen an einer Außenseite mündenden Klemmelementschacht (9, 9.1) aufweist, in die gegenüber der lichten Weite im Bereich des Überganges in die Lageraufnahme (11) des Klemmelementschachtes (9, 9.1) im Durchmesser größere Lageraufnahme (11) übergeht, dass in den Klemmelementschacht (9, 9.1) ein nach Art einer Omega-Feder ausgeführtes Klemmelement (8, 8.1, 8.2) eingesetzt ist, das mit seinem Ringabschnitt (14, 14.1) in der Lageraufnahme (11) und mit seinen davon nach außen abgewinkelten Fortsätzen (15, 15.1, 15.2, 15.3) innerhalb des Klemmelementschachtes (9, 9.1) angeordnet ist, und dass der Durchmesser des Ringabschnittes (14, 14.1) des Klemmelementes (8, 8.1, 8.2) im unbelasteten Zustand größer als die lichte Weite des Klemmelementschachtes (9, 9.1) im Übergang zur Lageraufnahme (11)und sein Innendurchmesser im unbelasteten Zustand kleiner ist als der Durchmesser des darin eingreifenden Lagerzapfens (6, 6.1, 6.2) des Anschlussteils (3, 3.1, 3.2) ist.

2. Ringbock nach Anspruch 1, **dadurch gekennzeichnet, dass** der Klemmelementschacht (9, 9.1) an der Unterseite der Lagerböcke (2, 2.1, 2.2) mündet.

3. Ringbock nach Anspruch 1 oder 2, **dadurch gekennzeichnet, dass** die Querschnittsfläche des Klemmelementschachtes (9, 9.1) quer zu seiner Längserstreckung rechteckförmig ausgeführt ist.

4. Ringbock nach einem der Ansprüche 1 bis 3, **dadurch gekennzeichnet, dass** die lichte Weite des Klemmelementschachtes (9, 9.1) in Richtung zur Lageraufnahme (11) hin zumindest mit seinem in die Mantelfläche der Lageraufnahme (11) übergehenden Wänden (10, 10.1, 10.2, 10.3) verjüngt ist, wobei die Verjüngung ausgeführt ist, damit die Mündung des Klemmelementschachts (9, 9.1) vordem maximalen Durchmesser der Lageraufnahme (11) in diese mündet und auf diese Weise eine Engstelle (13) bereitgestellt ist.

5. Ringbock nach Anspruch 3 und 4, **dadurch gekennzeichnet, dass** alle Wände (10, 10.1, 10.2, 10.3) des Klemmelementschachtes (9) in Richtung zur Lageraufnahme (11) gegeneinander verjüngt sind, wobei die einander gegenüberliegenden Wände (10, 10.1, 10.2, 10.3) mit derselben Neigung ausgeführt sind.

6. Ringbock nach einem der Ansprüche 1 bis 5, **dadurch gekennzeichnet, dass** die freien Enden der abgewinkelten Fortsätze (15, 15.1) des Klemmelements (8, 8.1) im unbelasteten Zustand mit solchem Abstand zu den zu ihren Flachseiten benachbarten Wänden (10, 10.1) des Klemmelementschachtes (9) angeordnet sind, dass ein Aufweiten des Ringabschnittes (14) des Klemmelementes (8, 8.1) durch Einsetzen eines Lagerzapfens (6, 6.1) möglich ist und die freien Enden bei in den Ringabschnitt (14) eingreifendem Lagerzapfen (6, 6.1) mit nur geringem Abstand oder ohne Vorspannung an der jeweils benachbarten Wand (10, 10.1) anliegend angeordnet sind.

7. Ringbock nach einem der Ansprüche 1 bis 5, **dadurch gekennzeichnet, dass** die freien Enden der abgewinkelten Fortsätze (15.2, 15.3) des Klemmelementes (8.2) im unbelasteten Zustand mit solchem Abstand zu den zu ihren Flachseiten benachbarten Wänden (10.2, 10.3) des Klemmelementschachtes (9.1) angeordnet sind, dass ein Aufweiten des Ringabschnittes (14.1) des Klemmelementes (8.2) durch Einsetzen des Lagerzapfens (6.2) möglich ist, und die abgewinkelten Fortsätze (15.2, 15.3) bei in den Ringabschnitt (14.1) eingreifenden Lagerzapfen (6.2) mit Vorspannung an der jeweils benachbarten Wand (10.2, 10.3) anliegend gehalten sind.

8. Ringbock nach Anspruch 7, **dadurch gekennzeichnet, dass** die abgewinkelten Fortsätze (15.2, 15.3) über den größten Teil ihrer Längserstreckung an der jeweils benachbarten Wand (10.2, 10.3) bei in den Ringabschnitt (14.1) eingreifenden Lagerzapfen (6.2) anliegen.

9. Ringbock nach einem der Ansprüche 1 bis 8, **dadurch gekennzeichnet, dass** die Lagerböcke (2, 2.1, 2.2) aus einem Lagerbockrohling geschmiedet sind und der Klemmelementschacht (9, 9.1) durch den Schmiedeprozess erzeugt worden ist.

10. Ringbock nach einem der Ansprüche 1 bis 9, **dadurch gekennzeichnet, dass** die Klemmelemente (8, 8.1, 8.2) als Bandfederelemente aus einem Federstahl hergestellt sind.

11. Ringbock nach einem der Ansprüche 1 bis 10, **dadurch gekennzeichnet, dass** die Lagerzapfen (6, 6.1, 6.2) eine zylindrische oder zumindest annähernd zylindrische Mantelfläche aufweisen.

12. Ringbock nach einem der Ansprüche 1 bis 11, **dadurch gekennzeichnet, dass** die Lagerzapfen (6, 6.1, 6.2) endseitig eine Fase (16) als Stellschräge zum Aufweiten des Ringabschnittes (14, 14.1) des Klemmelementes (8, 8.1, 8.2) beim Einstecken desselben aufweisen.

13. Ringbock nach einem der Ansprüche 1 bis 12, **dadurch gekennzeichnet, dass** die beiden Lagerzapfen (6, 6.1, 6.2) des Anschlussteils (3, 3.1, 3.2) ineinander übergehen und dieser stabförmige Abschnitt die Basis (4, 4.1) für eine daran angeformte Öse (7) oder einen daran angeformten Ösenbogen (5) ist.

14. Ringbock nach Anspruch 13, **dadurch gekennzeichnet, dass** das Anschlussteil (3, 3.1, 3.2) ein Schmiedeteil ist.

15. Ringbock nach einem der Ansprüche 1 bis 14, **dadurch gekennzeichnet, dass** die Lagerzapfen (6, 6.1, 6.2) außenseitig eine Markierung tragen, durch die die bestimmungsgemäße Einstecktiefe des jeweiligen Lagerzapfens (6, 6.1, 6.2) in eine Lageraufnahme (11) eines Lagerbockes (2, 2.1, 2.2) kenntlich gemacht ist.
